(19) **Europäisches Patentamt / European Patent Office / Office européen des brevets**

(11) **EP 1 508 816 B1**

(12) **FASCICULE DE BREVET EUROPEEN**

(45) Date de publication et mention
de la délivrance du brevet:
**16.11.2016 Bulletin 2016/46**

(51) Int Cl.:
**G01S 19/30** *(2010.01)*       **H04B 15/00** *(2006.01)*
**H04B 1/7075** *(2011.01)*       **H04B 1/707** *(2006.01)*

(21) Numéro de dépôt: **04291723.7**

(22) Date de dépôt: **07.07.2004**

(54) **Procédé de validation de la détection d'un pic de corrélation par un récepteur de système de positionnement par satellite**

Verfahren zur Bestätigung der Erfassung einer Korrelationsspitze mittels eines Empfängers für ein satellitengestütes Navigationssystem

Method for validating a detection of a correlation peak by means of a navigation satellite system receiver

(84) Etats contractants désignés:
**AT BE BG CH CY CZ DE DK EE ES FI FR GB GR HU IE IT LI LU MC NL PL PT RO SE SI SK TR**

(30) Priorité: **22.08.2003 FR 0310093**

(43) Date de publication de la demande:
**23.02.2005 Bulletin 2005/08**

(73) Titulaire: **Sound View Innovations, LLC**
**Jersey City, NJ 07302 (US)**

(72) Inventeur: **Monnerat, Michel**
**31000 Toulouse (FR)**

(74) Mandataire: **Benech, Frédéric et al**
**Cabinet Benech**
**146-150, Avenue des Champs-Elysées**
**75008 Paris (FR)**

(56) Documents cités:
**EP-A- 0 592 307       EP-A2- 1 037 407**
**WO-A2-00/54424       DE-A- 4 114 058**
**US-A- 5 815 539       US-A- 6 141 373**

- **COHEN M N ET AL: "MINIMUM PEAK SIDELOBE PULSE COMPRESSION CODES", INTERNATIONAL RADAR CONFERENCE. ARLINGTON, MAY 7 - 10, 1990; [INTERNATIONAL RADAR CONFERENCE], NEW YORK, IEEE, US, vol. -, 7 May 1990 (1990-05-07), pages 633-638, XP000131227,**

Printed by Jouve, 75001 PARIS (FR)

**Description**

La présente invention concerne un procédé de validation de la détection d'un pic de corrélation par un récepteur de système de positionnement par satellite.

Dans un système de positionnement par satellite utilisant des récepteurs du type RNSS (Radio Navigation Satellite System) tels qu'un récepteur GPS (Global Positioning System) ou GLONASS, les signaux de données permettant de calculer le positionnement du récepteur proviennent de différents satellites (quatre au minimum pour déterminer quatre inconnues x, y, z et t).

Le signal GPS émis par chacun des satellites est basé sur une technique de spectre étalé. Ainsi, le signal est un signal de données binaires modulé par un signal étalé spectralement selon un procédé d'accès multiple à répartition par code CDMA (Code Division Multiple Access). Autrement dit, chaque bit du signal de données est remplacé par une séquence d'étalement propre à chaque satellite. Les données sont transmises en mode série à 50 bits/s (50bits/s soit 0.02 s/bit). Une séquence d'étalement tel qu'une séquence pseudo aléatoire de type Gold est transmise à un rythme beaucoup plus élevé : une séquence de Gold peut être considérée comme une suite de bits, parcourue avec une période d'horloge bien définie ; l'expression appelée « moment de code » ou plus fréquemment « chip » désigne un bit de la séquence et, par extension, la durée d'un tel bit. La séquence d'étalement est ainsi transmise à un rythme de 1,023 Mchips/s (un chip dure donc environ 1 μs) et comporte 1023 « chips » (soit une durée de 1 ms) : il y a donc 20 répétitions de séquences par bit de données.

La modulation par le signal étalé spectralement entraîne qu'un démodulateur normal verra le signal de réception comme du bruit.

Le document US5815539 décrit un procédé pour caractériser des distorsions dans la fonction d'autocorrélation d'un récepteur de corrélation induites par trajets multiples dans le but de réduire les effets de ces distorsions induites par trajets multiples sur la précision de la détection de l'instant d'arrivée d'un signal reçu. L'amplitude des erreurs induites par trajets multiples affectant négativement la forme de la fonction d'autocorrélation est estimée en temps réel. Cette erreur est soustraite de la synchronisation du corrélateur orienté détection, produisant ainsi une fonction d'auto-corrélation plus précise.

De manière générale, la fonction de corrélation f(τ) de deux signaux $f_i(t)$ et $f_j(t)$ est donnée par la relation :

$$f\left(\tau\right) = \int_{+\infty}^{-\infty} f_i(t).f_j(t-\tau).dt$$ , où τ désigne un temps variable. Bien entendu, dans la pratique, l'intégration ne se fait pas de -∞ à +∞ mais sur une période de temps finie, en divisant l'intégrale par la durée de ladite période. On parlera de fonction d'autocorrélation lorsque les fonctions $f_i(t)$ et $f_j(t)$ sont identiques et de fonction d'intercorrélation lorsque les fonctions $f_i(t)$ et $f_j(t)$ sont distinctes.

Chaque satellite k possède son propre signal pseudo-aléatoire $c_k(t)$. Chacun de ces signaux pseudo-aléatoires possède la propriété suivante : sa fonction d'autocorrélation est nulle sauf au voisinage du décalage temporel nul où elle prend une allure triangulaire ; autrement dit, l'intégrale $\int_{+\infty}^{-\infty} c_k(t).c_k(t-\tau).dt$ est nulle lorsque τ est non nul et est maximale lorsque τ est nul.

En outre, les signaux associés chacun à un satellite différent sont choisis de sorte que leur fonction d'intercorrélation soit nulle ; autrement dit, l'intégrale $\int_{+\infty}^{-\infty} c_k(t).c_{k'}(t-\tau).dt$ est nulle quel que soit τ lorsque k et k' sont différents.

Les signaux étalés spectralement des satellites sont donc choisis de façon à être orthogonaux.

Lorsque le récepteur cherche à acquérir les données d'un satellite particulier, le récepteur corrèle le signal reçu avec une réplique de la séquence pseudo-aléatoire du satellite recherché (la séquence du satellite lui est attribuée une fois pour toute et ne change durant toute la vie du satellite).

Ainsi, le signal reçu S(t) est la somme de l'ensemble des signaux transmis par chaque satellite :

$$S(t) = \sum_{k=1}^{n} c_k(t).d_k(t)$$ , où n est le nombre de satellites, $c_k(t)$ désigne le signal étalé spectralement du satellite k et $d_k(t)$ désigne les données du satellite k.

Si on cherche à acquérir les données du satellite m, la réplique locale correspondra au signal $c_m(t)$. Ainsi, après corrélation et en supposant que les signaux d'étalement sont parfaitement orthogonaux, on élimine toutes les données des satellites non recherchés (les fonctions d'intercorrélation sont nulles) pour retrouver uniquement les données du satellite m. La corrélation est possible car la durée d'une séquence d'étalement est vingt fois plus petite que la durée d'un bit de données.

La phase d'acquisition du signal consiste à calculer la corrélation du signal reçu avec la réplique locale du code satellite recherché et ce, sur un domaine temporel équivalent à la périodicité du code soit 1ms, avec une profondeur (borne de l'intégrale) dépendant de la performance de détection que l'on veut atteindre.

Toutefois, la mise en oeuvre d'une telle solution pose certaines difficultés.

Ainsi, dans la pratique, les signaux étalés spectralement des satellites ne sont jamais parfaitement orthogonaux. Dès lors, les fonctions d'intercorrélation font apparaître des pics de corrélation. Ces pics de corrélation sont généralement plus faibles de -24 dB par rapport au pic d'autocorrélation. Cependant, lorsqu'un satellite non recherché présente une forte puissance d'émission (de l'ordre de 24 dB au dessus de celle du satellite recherché), il se peut qu'un pic secondaire présent sur la fonction d'intercorrélation soit plus élevé que le pic principal recherché de la fonction d'autocorrélation. Une telle situation peut notamment se produire dans des espaces où la propagation radioélectrique est perturbée (typiquement dans des zones urbaines ou à l'intérieur des bâtiments). Cette erreur de détection du pic de corrélation entraîne une erreur sur la détection (et donc sur l'instant de synchronisation), le pic de corrélation validé ne correspondant pas au satellite recherché. Une telle erreur a bien entendu un impact immédiat sur la précision de la localisation.

La présente invention vise à fournir un procédé validation de la détection d'un pic de corrélation permettant de confirmer ou d'infirmer la détection du pic de corrélation tout en conservant les signaux étalés spectralement existants et, par suite, de relaxer les contraintes d'orthogonalité imposées sur le design de famille de ces signaux lors du design du système de navigation par satellite.

La présente invention propose à cet effet un procédé de validation de la détection d'un pic de corrélation entre :

- un signal transmis par une pluralité de satellites de navigation et reçu par un récepteur de radionavigation satellitaire RNSS, ledit signal correspondant à une somme de signaux envoyés chacun par un satellite et modulés chacun par un signal étalé spectralement et caractéristique dudit satellite,
- une réplique locale générée par ledit récepteur, ladite réplique étant la réplique d'un signal étalé spectralement et caractéristique d'un satellite recherché,

ledit procédé comportant une étape de détermination de la fonction de corrélation en fonction du temps entre ledit signal reçu et ladite réplique locale,
ledit procédé étant caractérisé en ce qu'il comprend en outre une étape de comparaison de ladite fonction de corrélation avec la fonction d'autocorrélation théorique en fonction du temps dudit signal étalé spectralement caractéristique dudit satellite recherché sur l'ensemble du support de la fonction de corrélation,
et en ce que ladite étape de comparaison de ladite fonction de corrélation avec la fonction d'autocorrélation théorique comprend une étape de comparaison des pics secondaires de chacune desdites fonctions.

Grâce à l'invention, une fois le pic principal détecté, une vérification est mise en place en comparant la fonction de corrélation obtenue à partir du signal reçu avec la fonction d'autocorrélation théorique. Le pic principal correspond au pic de plus fort niveau sur la fonction de corrélation calculée. En pratique, la détection du pic principal de la fonction de corrélation permet de déterminer un instant de synchronisation supposé. La fonction d'autocorrélation théorique est calculée pour avoir un pic principal centré sur cet instant de synchronisation. Les deux fonctions possèdent donc un pic principal autour de l'instant de synchronisation supposé. Ces deux fonctions possèdent également des pics ou lobes secondaires. En comparant ces pics secondaires, c'est à dire en vérifiant s'ils apparaissent ou non au même moment, on peut donc en déduire si le pic principal détecté est bien associé au satellite recherché.

En outre, le procédé selon l'invention permet d'influencer l'approche adoptée sur le design des séquences d'étalement dans les cadres des systèmes CDMA. Le design n'impose plus nécessairement de minimiser les fonctions d'intercorrélation entre les signaux étalés spectralement associés à des satellites différents. La contrainte peut être ici relaxée en faisant simplement en sorte que la fonction d'autocorrélation théorique et chacune desdites fonctions d'intercorrélation théoriques soient différentes.

Avantageusement, le procédé selon l'invention comporte une étape de détermination de ladite fonction d'autocorrélation théorique en fonction du temps dudit signal étalé spectralement caractéristique dudit satellite recherché.

La fonction d'autocorrélation peut en effet soit être déjà mémorisée soit déterminée à chaque mise en oeuvre du procédé selon l'invention.

Avantageusement, ladite étape de comparaison de ladite fonction de corrélation avec la fonction d'autocorrélation théorique comprend une étape de comparaison des pics secondaires de chacune desdites fonctions.

Avantageusement, ladite étape de comparaison comporte une étape de calcul de la corrélation entre ladite fonction de corrélation et ladite fonction d'autocorrélation.

De manière avantageuse, ledit signal étalé spectralement est un signal modulant ledit signal avec une séquence connue, dite séquence pseudo aléatoire, en remplacement de chaque bit dudit signal.

Avantageusement, en cas de non validation de la détection dudit pic de corrélation, ledit procédé comporte les étapes suivantes :

- une étape de détermination des fonctions d'intercorrélation théoriques en fonction du temps entre ledit signal étalé spectralement caractéristique dudit satellite recherché et chacun des satellites différents dudit satellite recherché,
- une étape de comparaison de ladite fonction de corrélation avec chacune desdites fonctions d'intercorrélation théoriques.

Avantageusement, chacun desdits signaux étalés spectralement et associés à un satellite particulier est choisi de sorte que ladite fonction d'autocorrélation théorique et chacune desdites fonctions d'intercorrélation théoriques soient différentes.

Avantageusement, chacun desdits signaux étalés spectralement et associés à un satellite particulier est choisi de sorte que chacune desdites fonctions d'intercorrélation théoriques soient décorrélées.

La présente invention a également pour objet un dispositif pour la validation de la détection d'un pic de corrélation entre :

- un signal transmis par une pluralité de satellites de navigation et reçu par un récepteur de radionavigation satellitaire RNSS, ledit signal correspondant à une somme de signaux envoyés chacun par un satellite et modulés chacun par un signal étalé spectralement et caractéristique dudit satellite,
- une réplique locale générée par ledit récepteur, ladite réplique étant la réplique d'un signal étalé spectralement et caractéristique d'un satellite recherché, ledit dispositif comportant des moyens de détermination de la fonction de corrélation (3) en fonction du temps entre ledit signal reçu et ladite réplique locale,

ledit dispositif étant caractérisé en ce qu'il comprend en outre des moyens de comparaison de ladite fonction de corrélation (3) avec la fonction d'autocorrélation théorique (2) en fonction du temps dudit signal étalé spectralement caractéristique dudit satellite recherché sur l'ensemble du support de la fonction de corrélation, et en ce que lesdits moyens de comparaison de ladite fonction de corrélation (3) avec la fonction d'autocorrélation théorique (2) sont agencés pour comprendre une étape de comparaison des pics secondaires (5, 7) de chacune desdites fonctions.

Ce dispositif de validation est intégré au récepteur de radionavigation satellitaire RNSS et les moyens de détermination de la fonction de corrélation et de comparaison sont par exemple réalisés à l'aide de moyens logiciels.

D'autres caractéristiques et avantages de la présente invention apparaîtront dans la description suivante d'un mode de réalisation de l'invention, donné à titre illustratif et nullement limitatif.

Dans les figures suivantes :

- La figure 1 représente un premier graphe de corrélation illustrant le fonctionnement du procédé selon l'invention,
- La figure 2 représente un deuxième graphe de corrélation illustrant le fonctionnement du procédé selon l'invention.

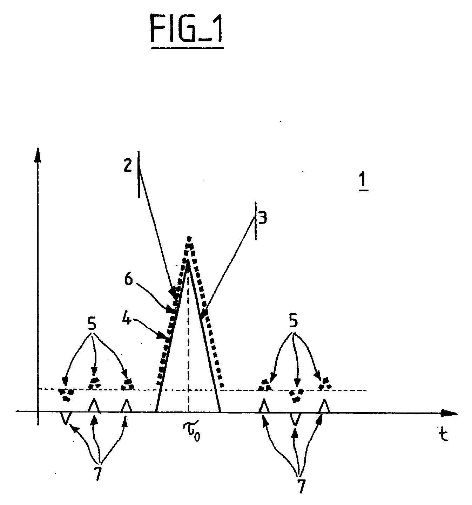

La figure 1 représente un premier graphe 1 illustrant le fonctionnement du procédé selon l'invention. Ce graphe 1 comporte une courbe 3 (en trait plein) représentant la fonction de corrélation, en fonction d'une variable de temps $\tau$, entre un signal reçu par un récepteur GPS de plusieurs satellites et une réplique locale du satellite sur lequel le récepteur cherche à se synchroniser. Cette courbe 3 présente :

- un pic principal 6 centré sur un instant $\tau_0$ que l'on

suppose être l'instant de synchronisation,
- des pics secondaires 7.

Le procédé selon l'invention permet de vérifier que cet instant $\tau_0$ est bien l'instant de synchronisation.

Pour cela, le graphe 1 comporte, également en fonction du temps $\tau$, une courbe 2 (en trait pointillé) représentant la fonction d'autocorrélation théorique du signal étalé spectralement caractéristique du satellite recherché et permettant de donner un pic principal 4 de corrélation centré sur $\tau_0$. En d'autres termes, si $c_m(t)$ est le signal étalé spectralement du satellite m recherché, la courbe 2 représentant une fonction $g(\tau)$, est donnée par la formule suivante :

$$g(\tau) = \int_{+\infty}^{-\infty} c_m(t-\tau_0).c_m(t-\tau).dt \,.$$

La courbe 2 présente également des pics secondaires 5.

On voit ici en comparant les courbes 2 et 3 que celles ci présentent exactement les mêmes pics secondaires 5 et 7. Ce résultat peut être confirmé en corrélant la fonction de corrélation de la courbe 3 avec la fonction d'autocorrélation de la courbe 2. Ainsi, dans le cas de la figure 1, la détection d'un pic de corrélation associé à l'instant de synchronisation $\tau_0$ est bien validée par le procédé selon l'invention.

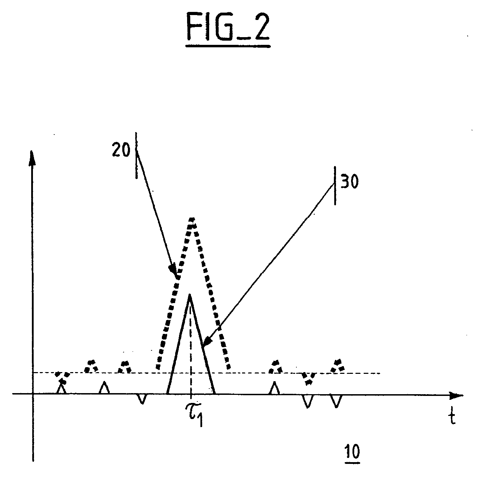

De manière similaire, la figure 2 représente un deuxième graphe 10 illustrant également le procédé selon l'invention. Le graphe 10 comporte deux courbes 20 et 30 en fonction d'une variable de temps $\tau$.

La courbe 30 (en trait plein) représente la fonction de corrélation, en fonction d'une variable de temps $\tau$, entre un signal reçu par un récepteur GPS de plusieurs satellites et une réplique locale du satellite sur lequel le récepteur cherche à se synchroniser. Comme la courbe 3 présentée en figure 1, la courbe 30 présente un pic principal centré sur un instant, noté $\tau_1$, et des pics secondaires.

La courbe 20 (en trait pointillé) représente la fonction d'autocorrélation théorique du signal étalé spectralement caractéristique du satellite recherché et permettant de donner un pic principal de corrélation centré également sur $\tau_1$.

Contrairement au cas de la figure 1, les courbes 20 et 30 présentent ici de nombreux pics secondaires différents et sont donc très peu corrélées entre elles. En conséquence, la détection du pic de corrélation associé à l'instant de synchronisation $\tau_1$, n'est pas validée. Le procédé selon l'invention permet de pointer une erreur de détection, le satellite recherché ne correspondant au pic de corrélation trouvé.

Les pics sont ici signés. Ceci sous-entend une intégration cohérente (aucune élévation au carré de la fonction de corrélation). L'invention porte aussi sur une intégration non cohérente (élévation au carré de la fonction de corrélation). Le critère sera néanmoins moins discriminant car tous les pics secondaires seront de même signe et donc seule la différence de position des pics affectera la différence de ressemblance.

Notons que l'on peut étendre le procédé afin de déterminer à quel satellite se rapporte le pic erroné. Il suffit pour cela de déterminer les fonctions d'intercorrélation théoriques, en fonction du temps τ, entre le signal étalé spectralement caractéristique du satellite recherché et chacun des satellites différents du satellite recherché. On corrèle ensuite chacune des fonctions d'intercorrélation avec la fonction de corrélation de la courbe 30 ; la meilleure corrélation obtenue permet de déterminer le satellite correspondant.

Bien entendu, l'invention n'est pas limitée au mode de réalisation qui vient d'être décrit.

Notamment, l'invention a été décrite dans le cas d'un système GPS mais il peut s'agir d'un autre système RNSS tel q'un récepteur du type GLONASS ou GALILEO.

## Revendications

1. Procédé de validation de la détection d'un pic de corrélation entre:

   - un signal transmis par une pluralité de satellites de navigation et reçu par un récepteur de radionavigation satellitaire RNSS, ledit signal correspondant à une somme de signaux envoyés chacun par un satellite et modulés chacun par un signal étalé spectralement et caractéristique dudit satellite,
   - une réplique locale générée par ledit récepteur, ladite réplique étant la réplique d'un signal étalé spectralement et caractéristique d'un satellite recherché,

   ledit procédé comportant une étape de détermination de la fonction de corrélation (3) en fonction du temps entre ledit signal reçu et ladite réplique locale, ledit procédé étant **caractérisé en ce qu'il** comprend en outre une étape de comparaison de ladite fonction de corrélation (3) avec la fonction d'autocorrélation théorique (2) en fonction du temps dudit signal étalé spectralement caractéristique dudit satellite recherché sur l'ensemble du support de la fonction de corrélation,
   et **en ce que** ladite étape de comparaison de ladite fonction de corrélation (3) avec la fonction d'autocorrélation théorique (2) comprend une étape de comparaison des pics secondaires (5, 7) de chacune desdites fonctions.

2. Procédé de validation selon la revendication 1, **caractérisé en ce qu'**il comporte une étape de détermination de ladite fonction d'autocorrélation théorique en fonction du temps dudit signal étalé spectralement caractéristique dudit satellite recherché.

3. Procédé de validation selon la revendication 1 ou la revendication 2, **caractérisé en ce que** ladite étape de comparaison comporte une étape de calcul de la corrélation entre ladite fonction de corrélation et ladite fonction d'autocorrélation.

4. Procédé de validation selon l'une des revendications 1 à 3, **caractérisé en ce que** ledit signal étalé spectralement est un signal modulant ledit signal avec une séquence connue, dite séquence pseudo aléatoire, en remplacement de chaque bit dudit signal.

5. Procédé de validation selon l'une des revendications précédentes, **caractérisé en ce que**, en cas de non validation de la détection dudit pic de corrélation, ledit procédé comporte les étapes suivantes:

   - une étape de détermination des fonctions d'intercorrélation théoriques en fonction du temps entre ledit signal étalé spectralement caractéristique dudit satellite recherché et chacun des satellites différents dudit satellite recherché,
   - une étape de comparaison de ladite fonction de corrélation avec chacune desdites fonctions d'intercorrélation théoriques.

6. Procédé de validation selon la revendication 5, **caractérisé en ce que** chacun desdits signaux étalés spectralement et associés à un satellite particulier est choisi de sorte que ladite fonction d'autocorrélation théorique et chacune desdites fonctions d'intercorrélation théoriques soient différentes.

7. Procédé de validation selon l'une des revendications 5 ou 6, **caractérisé en ce que** chacun desdits signaux étalés spectralement et associés à un satellite particulier est choisi de sorte que chacune desdites fonctions d'intercorrélation théoriques soient décorrélées.

8. Dispositif pour la validation de la détection d'un pic de corrélation entre:

   - un signal transmis par une pluralité de satellites de navigation et reçu par un récepteur de radionavigation satellitaire RNSS, ledit signal correspondant à une somme de signaux envoyés chacun par un satellite et modulés chacun par un signal étalé spectralement et caractéristique dudit satellite,
   - une réplique locale générée par ledit récepteur, ladite réplique étant la réplique d'un signal étalé spectralement et caractéristique d'un satellite recherché,

ledit dispositif comportant des moyens de détermination de la fonction de corrélation (3) en fonction du temps entre ledit signal reçu et ladite réplique locale,

ledit dispositif étant **caractérisé en ce qu'**il comprend en outre des moyens de comparaison de ladite fonction de corrélation (3) avec la fonction d'autocorrélation théorique (2) en fonction du temps dudit signal étalé spectralement caractéristique dudit satellite recherché sur l'ensemble du support de la fonction de corrélation,

et **en ce que** lesdits moyens de comparaison de ladite fonction de corrélation (3) avec la fonction d'autocorrélation théorique (2) sont agencés pour comprendre une étape de comparaison des pics secondaires (5, 7) de chacune desdites fonctions.

**Patentansprüche**

1. Verfahren zur Bestätigung der Erfassung einer Korrelationsspitze zwischen:

    - einem von einer Mehrzahl von Navigationssatelliten übertragenen und von einem satellitengestützten RNSS-Funknavigationsempfänger empfangenen Signal, wobei das Signal einer Summe von jeweils von einem Satelliten ausgesendeten und jeweils mit einem spektral gespreizten und für den Satelliten charakteristischen Signal modulierten Signalen entspricht,
    - einer lokalen, durch den Empfänger generierten Wiedergabe, wobei es sich bei der Wiedergabe um die Wiedergabe eines spektral gespreizten und für einen gesuchten Satelliten charakteristischen Signals handelt,
    - wobei das Verfahren einen Schritt der Bestimmung der zeitabhängigen Korrelationsfunktion (3) zwischen dem empfangenen Signal und der lokalen Wiedergabe aufweist,
    - wobei das Verfahren
    **dadurch gekennzeichnet ist,**
    **dass** es ferner einen Schritt des Vergleichens der Korrelationsfunktion (3) mit der zeitabhängigen theoretischen Autokorrelationsfunktion (2) des spektral gespreizten, für den über die gesamte Unterstützung der Korrelationsfunktion gesuchten Satelliten charakteristischen Signals, umfasst,
    - und **dass** der Schritt des Vergleichens der Korrelationsfunktion (3) mit der theoretischen Autokorrelationsfunktion (2) einen Schritt des Vergleichens der sekundären Spitzen (5, 7) der jeweiligen Funktionen umfasst.

2. Bestätigungsverfahren nach Anspruch 1,
    **dadurch gekennzeichnet,**
    **dass** es einen Schritt der Bestimmung der zeitabhängigen theoretischen Autokorrelationsfunktion des spektral gespreizten, für den gesuchten Satelliten charakteristischen Signals aufweist.

3. Bestätigungsverfahren nach Anspruch 1 oder Anspruch 2,
    **dadurch gekennzeichnet,**
    **dass** der Schritt des Vergleichens einen Schritt des Berechnens der Korrelation zwischen der Korrelationsfunktion und der Autokorrelationsfunktion.

4. Bestätigungsverfahren nach einem der Ansprüche 1 bis 3,
    **dadurch gekennzeichnet,**
    **dass** es sich bei dem spektral gespreizten Signal um ein Signal handelt, welches das Signal mit einer bekannten, so genannten pseudozufälligen Sequenz moduliert, indem jedes Bit des Signals ausgetauscht wird.

5. Bestätigungsverfahren nach einem der vorhergehenden Ansprüche 1 bis 3,
    **dadurch gekennzeichnet,**
    **dass** bei Nichtbestätigung der Erfassung der Korrelationsspitze das Verfahren die folgenden Schritte aufweist:

    - einen Schritt der Bestimmung der zeitabhängigen theoretischen Interkorrelationsfunktionen zwischen dem spektral gespreizten, für den gesuchten Satelliten charakteristischen Signal und jedem von dem gesuchten Satelliten unterschiedlichen Satelliten,
    - einen Schritt des Vergleichens der Korrelationsfunktion mit den jeweiligen theoretischen Interkorrelationsfunktionen.

6. Bestätigungsverfahren nach Anspruch 5,
    **dadurch gekennzeichnet,**
    **dass** die jeweiligen spektral gespreizten und einem bestimmten Satelliten zugeordneten Signale so gewählt sind, dass die theoretische Autokorrelationsfunktion und die jeweiligen theoretischen Interkorrelationsfunktionen unterschiedlich sind.

7. Bestätigungsverfahren nach einem der Ansprüche 5 oder 6,
    **dadurch gekennzeichnet,**
    **dass** die jeweiligen spektral gespreizten und einem bestimmten Satelliten zugeordneten Signale so gewählt sind, dass die jeweiligen theoretischen Interkorrelationsfunktionen dekorreliert sind.

8. Vorrichtung Verfahren zur Bestätigung der Erfassung einer Korrelationsspitze zwischen:

    - einem von einer Mehrzahl von Navigationssatelliten übertragenen und von einem satellitengestützten RNSS-Funknavigationsempfänger empfangenen Signal, wobei das Signal einer Summe von jeweils von einem Satelliten ausgesendeten und jeweils mit einem spektral gespreizten und für den Satelliten charakteristischen Signal modulierten Signalen entspricht,

- einer lokalen, durch den Empfänger generierten Wiedergabe, wobei es sich bei der Wiedergabe um die Wiedergabe eines spektral gespreizten und für einen gesuchten Satelliten charakteristischen Signals handelt,

- wobei die Vorrichtung Mittel zur Bestimmung der zeitabhängigen Korrelationsfunktion (3) zwischen dem empfangenen Signal und der lokalen Wiedergabe aufweist,

- wobei die Vorrichtung

**dadurch gekennzeichnet ist,**

**dass** sie ferner Mittel für den Vergleich der Korrelationsfunktion (3) mit der zeitabhängigen theoretischen Autokorrelationsfunktion (2) des spektral gespreizten, für den über die gesamte Unterstützung der Korrelationsfunktion gesuchten Satelliten charakteristischen Signals, umfasst,

- und **dass** die Mittel für den Vergleich der Korrelationsfunktion (3) mit der theoretischen Autokorrelationsfunktion (2) angeordnet sind, um einen Schritt des Vergleichens der sekundären Spitzen (5, 7) der jeweiligen Funktionen zu umfassen.

## Claims

1. Method of validating the detection of a correlation peak between:

    - a signal transmitted by a plurality of navigation satellites and received by an RNSS radio navigation satellite system receiver, said signal corresponding to a sum of signals each sent by a satellite and each modulated by a spectrally spread signal characteristic of said satellite,
    - a local replica generated by said receiver, said replica being the replica of a spectrally spread signal characteristic of a satellite being sought,

    said method comprising a step of determining the correlation function (3) as a function of the time between said signal received and said local replica, said method being **characterised in that** it also comprises a step of comparing said correlation function (3) with the theoretical auto-correlation function (2) as a function of the time of said spectrally spread signal characteristic of said satellite being sought over the entirety of the support of the correlation function,

    and **in that** said step of comparing said correlation function (3) with the theoretical auto-correlation function (2) comprises a step of comparing the secondary peaks (5, 7) of each of said functions.

2. Method of validating according to claim 1, **characterised in that** it comprises a step of determining said theoretical auto-correlation function as a function of the time of said spectrally spread signal characteristic of said satellite being sought.

3. Method of validating according to claim 1 or claim 2, **characterised in that** said step of comparing comprises a step of calculating the correlation between said correlation function and said auto-correlation function.

4. Method of validating according to one of claims 1 to 3, **characterised in that** said spectrally spread signal is a signal modulating said signal with a known sequence, designated a pseudo random sequence, replacing each bit of said signal.

5. Method of validating according to one of the preceding claims, **characterised in that**, in the case of non-validation of the detection of said correlation peak, said method comprises the following steps:

    - a step of determining the theoretical intercorrelation functions as a function of the time between said spectrally spread signal characteristic of said satellite being sought and each of the satellites other than said satellite being sought,
    - a step of comparing said correlation function with each of said theoretical inter correlation functions.

6. Method of validating according to claim 5, **characterised in that** each of said spectrally spread signals associated with a particular satellite is chosen such that said theoretical auto-correlation function and each of said theoretical intercorrelation functions are different.

7. Method of validating according to one of claims 5 or 6, **characterised in that** each of said spectrally spread signals associated with a particular satellite is chosen such that each of said theoretical inter correlation functions are de-correlated.

8. Device for validating the detection of a correlation peak between:

    - a signal transmitted by a plurality of navigation satellites and received by an RNSS radio navigation satellite system receiver, said signal corresponding to a sum of signals each sent by a satellite and each modulated by a spectrally spread signal characteristic of said satellite,

- a local replica generated by said receiver, said replica being the replica of a spectrally spread signal characteristic of a satellite being sought,

said device comprising means of determining the correlation function (3) as a function of the time between said signal received and said local replica, said device being **characterised in that** it also comprises means of comparing said correlation function (3) with the theoretical auto-correlation function (2) as a function of the time of said spectrally spread signal characteristic of the said satellite being sought over the entirety of the support of the correlation function, and **in that** said means of comparing said correlation function (3) with the theoretical auto-correlation function (2) are arranged to comprise a step of comparing the secondary peaks (5, 7) of each of said functions.

# FIG_1

# FIG_2

**EP 1 508 816 B1**

## RÉFÉRENCES CITÉES DANS LA DESCRIPTION

**Documents brevets cités dans la description**

*   US 5815539 A